(19) Europäisches Patentamt

European Patent Office

Office européen des brevets

(11) **EP 0 844 155 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(51) Int Cl.⁷: $B60T\ 8/00$, $B60T\ 8/34$

(21) Anmeldenummer: **97116337.3**

(22) Anmeldetag: **19.09.1997**

(54) **Verfahren zur Giermoment-Abschwächung in einem Fahrzeug mit Antiblockiersystem**

Yaw rate reduction procedure in a vehicle with an anti-lock bracking system

Procédé de réduction de couple de lacet dans un véhicule ayant un système antiblocage.

(84) Benannte Vertragsstaaten:
**DE FR SE**

(30) Priorität: **20.11.1996 DE 19647997**

(43) Veröffentlichungstag der Anmeldung:
**27.05.1998 Patentblatt 1998/22**

(73) Patentinhaber: **WABCO GmbH & Co. OHG**
**30453 Hannover (DE)**

(72) Erfinder:
- **Rosendahl, Hartmut**
  **30167 Hannover (DE)**
- **Hinz, Wolfgang**
  **31515 Wunstorf (DE)**
- **Köster, Harald**
  **30451 Hannover (DE)**
- **Zielke, Frank**
  **30890 Barsinghausen (DE)**
- **Rode, Konrad**
  **30926 Seelze (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
EP-A- 0 291 256     EP-A- 0 482 374
DE-A- 4 114 734     US-A- 5 275 474

EP 0 844 155 B1

## Beschreibung

Die Erfindung bezieht sich auf ein Verfahren zur Giermoment-Abschwächung in einem Fahrzeug mit Antiblockiersystem gemäß dem Oberbegriff des Patentanspruchs 1.

Bei einer Abbremsung eines Fahrzeugs auf einer Fahrbahn, welche seitenweise unterschiedliche Reibwerte aufweist, entsteht bekanntlich ein Giermoment, welches das Fahrzeug in Richtung auf die Straßenseite mit dem höheren Reibwert hin abzulenken versucht. Diesem Effekt muß der Fahrer durch Gegenlenken begegnen. Dies kann jedoch für ungeübte Fahrer problematisch sein, insbesondere dann, wenn das Giermoment durch ungünstige Umstände plötzlich auftritt oder besonders hoch ausfällt. Solche Umstände können z. B. ein kurzer Radstand des Fahrzeugs, große Spurweite, großer positiver Lenkrollradius, eine geringe Beladung, besonders stark unterschiedliche Straßenverhältnisse wie z. B. Beton gegenüber Eis, und auch besonders starke Bremsmanöver, wie z. B. eine Bremsung mit regelndem Antiblockiersystem (ABS) sein.

Insbesondere bei mit einem ABS ausgerüsteten Fahrzeugen ist es deshalb bereits bekannt, das bei einer geregelten Bremsung auf einer Straße mit seitenweise ungleicher Oberfläche (μ-Split) entstehende Giermoment langsam ansteigend aufzubauen und damit die Stabilität des Fahrzeugs zu erhöhen und den Fahrer zu entlasten. Dies geschieht durch besondere Maßnahmen innerhalb der Elektronik des ABS (DE-OS 28 55 326). Das auf der glatten Straßenseite laufende Rad (Low-Rad) wird durch das ABS zuerst geregelt, wahrend das auf der griffigen Seite laufende Rad (High-Rad) von dem Bremsdruck-Regelsignalen des Low-Rades mitgesteuert wird.

Der Differenzdruck bzw. das Giermoment steigt dabei solange an, bis auch das High-Rad zu regeln anfängt.

Es sind auch Fahrzeuge mit sogenanntem elektronischen Bremssystem (EBS) bekannt, bei denen ein von einem Bremswertgeber stammender elektrischer Sollwert als Bremsdruck in den Bremszylindern (Istwert) einregelbar ist (DE-OS 44 06 235). Auch diese Bremssysteme sind in der Regel mit einem ABS ausgestattet. Da hier zur Erfassung der Bremsdrücke Drucksensoren zur Verfügung stehen, ist es naheliegend, bei einem pneumatischen Bremssystem mit ABS die Bremsdruckdifferenz (ΔP) zwischen dem Low-Rad auf der glatten Straßenseite und dem High-Rad auf der griffigen Straßenseite auf einen konstanten Wert zu begrenzen und hiermit eine Giermoment-Abschwächung zu erzielen.

Weiter ist ein konventionelles ABS bekannt (DE-OS 24 60 309), das mit Bremsdruck-Sensoren ausgerüstet ist. Dabei kann das High-Rad vom ABS-regelnden Low-Rad druckmäßig mitgesteuert werden, oder auch der Druck des High-Rades unter Wahrung einer zweckmäßigen mittleren Bremdruckdifferenz (ΔP) zum Druck des Low-Rades auf einem konstanten Wert gehalten werden.

Schließlich ist aus der DE-PS 28 51 107 bekannt, bei einem ABS das auf μ-Split-Fahrbahnen entstehende Giermoment dadurch zu begrenzen, daß der Bremsdruck am High-Rad während der Entluftung des Low-Rades noch solange konstant gehalten wird, bis das Schlupf-Signal (λ) des Low-Rades abfällt. Im Anschluß hieran wird das High-Rad auch entlüftet, und zwar für eine Zeit, die einen bestimmten Bruchteil seiner Druckhaltezeit beträgt. Auch hierdurch wird ein langsam ansteigendes, weitgehend ruckfreies Giermoment erzielt.

Nachteilig an den bekannten Anordnungen ist, daß die sich ergebende Giermoment-Abschwächung nicht auf die jeweilige Straßenbeschaffenheit von beiden Straßenseiten, also auch der High-Seite, und auf das jeweilige Fahrzeug abgestimmt ist. Der maximale Bremsdruck des High-Rades ist durch den zeitlich verzögerten Aufbau von dem durch die Reibkraft des Low-Rades bestimmten Bremsdruckverlauf des Low-Rades abhängig und somit in der Anfangs-Phase begrenzt. Hierdurch wird die für ein noch beherrschbares Fahrzeugverhalten maximal zulässige Bremskraft des High-Rades nicht immer ausreichend ausgenutzt. Es ist also gegebenenfalls möglich, daß durch eine zu starke Unterbremsung des High-Rades bei wechselnder Beschaffenheit der Straßenoberfläche Bremsweg verschenkt wird.

Unter Umständen ist es auch möglich, daß die bekannte konstante Ausbildung der Bremsdruckdifferenz (ΔP) für kritische Fahrzeuge (z. B. Sattelschlepper ohne Auflieger) zu hoch ist, so daß diese dann vom Fahrer nur schwer oder gar nicht beherrschbar sind.

Der Erfindung liegt die Aufgabe zugrunde, ein Verfahren zur Giermoment-Abschwachung in einem Fahrzeug mit Antiblockiersystem anzugeben, welches einerseits den Fahrer von einem übermäßigen Gegenlenken entlastet, und andererseits den Bremsweg des Fahrzeugs gegenüber den bekannten Systemen verkürzt.

Diese Aufgabe wird durch die im Kennzeichen des Patentanspruchs 1 enthaltene Erfindung gelöst. Die Unteransprüche enthalten zweckmäßige Weiterbildungen.

Durch die Anwendung des erfindungsgemäßen Verfahrens ist eine Giermoment-Abschwachung möglich, die sich den wechselnden Straßenbeschaffenheiten und Fahrzeug-Typen bzw. - Beladungen selbständig anpaßt und damit zur Verkürzung des Gesamt-Bremsweges beiträgt. Die Beherrschbarkeit des Fahrzeugs bleibt dabei erhalten. Durch die Einbeziehung des Abregeldruckes in die Ermittlung der zulässigen Druckdifferenz wird sowohl die Straßen-Güte als auch die Beladung des Fahrzeugs in besonders einfacher Weise berücksichtigt.

Die Erfindung wird im folgenden anhand einer Zeichnung naher erläutert.

Dabei zeigen:

Fig. 1    ein schematisches Blockschaltbild eines elektronischen Bremssystems (EBS) mit integriertem Antiblockiersystem (ABS);

Fig. 2    ein Diagramm, in welchem Radgeschwindigkeiten (V), Bremsdrücke ($P_B$), und Regelsignale ($\pm$ b, $\lambda$) des Low-Rades und des High-Rades der Lenkachse (Vorderachse VA) über der Zeit (t) während einer geregelten Bremsung aufgetragen sind.

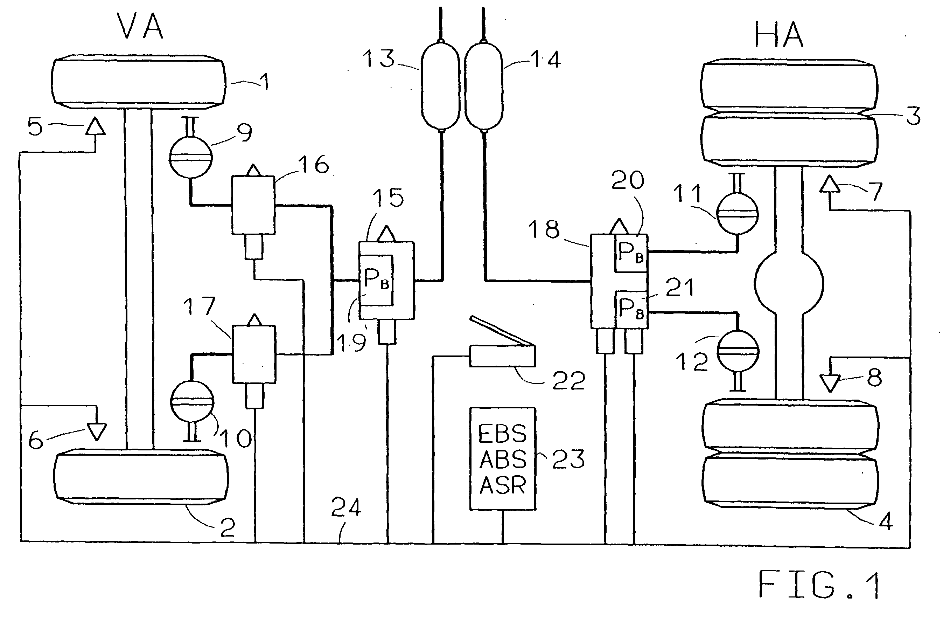

In der Fig. 1 ist ein Blockschaltbild einer Bremsanlage eines Nutzfahrzeuges mit elektronischem Bremssystem (EBS) sowie integrierter ABS und ASR-Funktion dargestellt. Das Fahrzeug besitzt Rader (1, 2) an der Vorderachse (VA) sowie Räder (3, 4), welche als Zwillingsreifen ausgebildet sind, an der Hinterachse (HA). Die Drehzahlen sämtlicher Räder können mit Drehzahlsensoren (5 bis 8) abgefühlt werden. Die Räder der Vorderachse sind mit Bremszylindern (9, 10), und die Räder der Hinterachse mit Bremszylindern (11, 12) zu bremsen. Zur Übermittlung der Bremskräfte dient in diesem Fall Druckluft, welche in Vorratsbehältern (13, 14) gespeichert ist. Der für die Hinterachse zuständige Behälter (14) ist über ein Proportionalventil (18) mit den Bremszylindern (11, 12) für die Hinterachse verbunden. Das genannte Proportionalventil (18) ist elektrisch über Signale, welche aus einem Elektronik-Baustein (23) kommen, ansteuerbar. Die Bremsdrücke ($P_B$) der Bremszylinder (11, 12) der Hinterräder sind über Drucksensoren (20, 21) abfühlbar und werden der Elektronik (23) zurückgemeldet. Auf diese Weise ist eine genaue Einregelung des gewünschten Bremsdruckes möglich. Dieser wird durch einen vom Fahrer betätigbaren Bremssignalgeber (22) vorgegeben, der ein entsprechendes elektrisches Ausgangssignal abgibt. Der Bremssignalgeber (22) ist, wie alle anderen elektrischen Komponenten, an ein Bussystem (24) angeschlossen, welches zur Übermittlung von Nachrichten in beiden Richtungen geeignet ist, und z. B. ein CAN-Bus sein kann. Die Komponenten enthalten ebenfalls einen Elektronik-Anteil (Interface).

Anstelle eines Bus-Systems kann auch eine konventionelle Verkabelung vorgesehen sein.

Zur Einregelung der Betriebs-Bremsdrücke der Vorderräder ist ein gemeinsames Proportionalventil (15) vorgesehen. Dieses weist zur Drucksensierung einen Drucksensor (19) auf. Eine Einzeleinstellung der Drücke der beiden Vorderräder ist hier also nicht moglich.

Der Ausgang des Proportionalventils (15) ist über zwei ABS-Ventile (16, 17) an die Bremszylinder (9, 10) der Vorderachse angeschlossen. Die genannten ABS-Ventile (16, 17) sind als Auf-Zu-Ventile ausgebildet und ebenfalls vom Bussystem (24) aus steuerbar. Auch hier kann anstelle eines Bussystems auch eine konventionelle Verkabelung vorgesehen sein.

Das oben beschriebene Brems-Regelsystem wird auch als Hybridsystem bezeichnet. Ein solches System hat den Vorteil, daß das Regelventil (15) bedeutend einfacher und preisgünstiger ausgebildet werden kann, als das Regelventil (18) für die Hinterachse. Da das Regelventil (15) keine Blockierschutz-Aufgaben zu übernehmen braucht, braucht die Verstellgeschwindigkeit nicht übermäßig hoch sein. Die Blockierschutzfunktion wird statt dessen von den genannten Blockierschutzventilen (16, 17) übernommen, welche sehr schnell reagieren können. Auf diese Weise wird erreicht, daß die Blockierschutzfunktion, welche an der Vorderachse besonders wichtig ist, hier besonders schnell ausgeführt werden kann. Außerdem wird gegenüber dem Vollsystem mit einem schnellen Regelventil (Proportionalventil) pro Bremszylinder auch für die Vorderachse eine Kostenersparnis erzielt.

Eine Einregelung eines gewünschten Bremsdruckes beim Hybridsystem ist für die Vorderachse nur bei Betriebsbremsungen bzw. bei offenen ABS-Ventilen (16, 17) möglich. Während das ABS-System arbeitet, sind dagegen die sich in den Bremszylindern (9, 10) der Vorderachse einstellenden Bremsdrücke nicht mehr im einzelnen bekannt. Die Einstellung eines konkreten Differenzdruckes $\Delta$P bzw. Giermomentes ist also für die Vorderachse eines derartigen Hybridsystems nicht möglich.

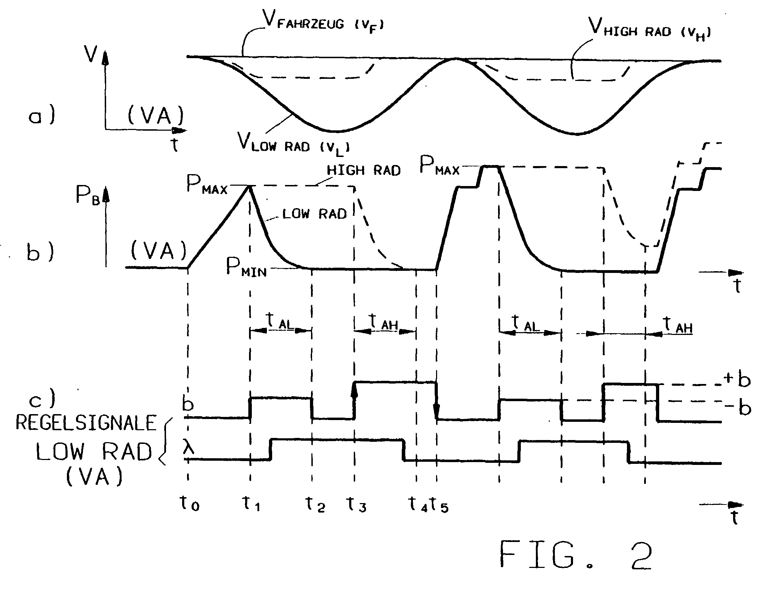

Im Diagramm der Fig. 2, die aus den Teilen a), b), c) besteht, sind für eine ABS-geregelte Bremsung verschiedene Geschwindigkeitsverläufe, Druckverlaufe, sowie Regelsignale über der Zeit aufgetragen.

Die Fig. 2a zeigt über der Zeit t die während einer ABS-Regelung gleichmäßig abnehmende Fahrzeuggeschwindigkeit ($V_F$), die wechselnde Radgeschwindigkeit des Low-Rades ($V_L$), sowie die etwa synchron zum Low-Rad mitgesteuerte Geschwindigkeit des High-Rades ($V_H$).

Die Fig. 2b zeigt die Bremsdrücke ($P_B$) des High- sowie des Low-Rades der Vorderachse über der Zeit t.

Die Fig. 2c zeigt die zugehörigen Regelsignale des Low-Rades der Vorderachse, und zwar die Radbeschleunigung ($\pm$ b) sowie den Radschlupf ($\lambda$) über der Zeit (t).

Zum Zeitpunkt $t_0$ beginnt eine Bremsung. Der Bremsdruck ($P_B$) steigt steil an, bis zum Zeitpunkt $t_1$ ein -b-Regelsignal auftritt, und der Bremsdruck, ausgehend vom Höchstwert Pmax (Abregeldruck) wieder schnell absinkt. Die Absenkung wird beendet, sobald das -b-Signal zum Zeitpunkt $t_2$ wieder abfällt. Die Zeitdauer $t_{AL}$ von t1 bis t2 wird innerhalb der Elektronik (23) ermittelt und gespeichert. Ab dem Zeitpunkt $t_1$ wird der Druck im High-Rad nicht weiter gesteigert, sondern bis zum Zeitpunkt $t_3$ konstant gehalten. Der genannte Zeitpunkt $t_3$ ergibt sich aus einem Auftreten eines +b-Regelsignals. Ab diesem Zeitpunkt wird der Bremsdruck auch des High-Rades abgesenkt, und zwar bis zum Zeitpunkt $t_4$. Der genannte Zeitpunkt $t_4$ ergibt sich aus der Summe des Zeitpunktes $t_3$ und einer Zeit $t_{AH}$. Die genannte Zeit $t_{AH}$ wird, wie im folgenden näher erläutert wird, von der Elektronik (23) berechnet.

Ab dem Zeitpunkt $t_5$, wo das +b-Signal wieder abfällt, beginnt mit einem erneuten Druckanstieg im Low-Rad und im High-Rad der zweite ABS-Regelzyklus.

Das Regelsignal λ aus Fig. 2c gibt an, in welchen Zeitabschnitten das geregelte Low-Rad eine Schlupfschwelle überschreitet. Im oben beschriebenen Beispiel wird das λ-Signal nicht direkt benutzt. Es dient aber im ABS u. a. dazu, ein sogenanntes "schleichendes Blockieren" der Räder zu verhindern.

Gemäß der Erfindung wird nun ein optimales Giermoment, welches den Straßenverhaltnissen und der Beladung des Fahrzeugs angepaßt ist, dadurch erzielt, daß die Entluftungszeit ($t_{AH}$) des Bremszylinders (9 oder 10) des mitgesteuerten High-Rades der Vorderachse (VA) von den Bremsdrücken ($P_B$) des High- und des Low-Rades der Hinterachse (Antriebsachse) (HA) oder von den Bremsdrücken des High-Rades und des Low-Rades der Hinterachse und des Low-Rades der Vorderachse (VA) abhängt. Als obengenannter Bremsdruck ($P_B$) wird zweckmäßigerweise der sogenannte Abregeldruck (Pmax in Fig. 2b) genutzt. Der Abregeldruck ist der jeweils höchste Druck im Bremszylinder während eines ABS-Regelzyklus, dem sich im allgemeinen eine Drucksenkungsphase anschließt. Der Bremsdruck ist direkt proportional zur Bremskraft. Damit ergibt sich, daß der Abregeldruck direkt proportional zur gerade vorherrschenden maximalen Bremskraft und somit auch zum gerade verfügbaren Kraftschlußpotential zwischen Reifen und Straße ist. Da sich dieses mit zunehmenden Reibwert (oder auch Straßengüte) und zunehmender Radlast erhöht, enthält der Abregeldruck sowohl Informationen über die Straßengüte als auch über die Beladung des Fahrzeugs. Im allgemeinen werden zur Berechnung der obengenannten Entlüftungszeit ($t_{AH}$) die Abregeldrücke der Hinterachse verwendet, da es im allgemeinen ausreichend ist, die Bremsdrücke in den Hauptbremszylindern der Hinterräder mit den (relativ aufwendigen) Drucksensoren zu sensieren.

Nach einer ersten Variante der Erfindung wird die obengenannte Entlüftungszeit mittels der Elektronik (23) berechnet nach der Formel

$$t_{AH} = A_1 \times t_{AL}$$

mit

$t_{AH}$ :  Entlüftungszeit des mitgesteuerten Vorder rades (High-Rad)

$t_{AL}$ :  Entlüftungszeit des geregelten Vorderrades (Low-Rad)

$$A_1 = K_1 - K_2 \times (Pmax_H + Pmax_L)$$

$K_1, K_2$:  Konstanten

$Pmax_H$:  Abregeldruck des Antriebsrades der High-Seite

$Pmax_L$:  Abregeldruck des Antriebsrades der Low-Seite.

Die sich jeweils ergebenden Werte für die Zeit $t_{AL}$ werden von der Elektronik (23) ermittelt.

Als sinnvolle Wertebereiche für die Konstanten $K_1$ und $K_2$ haben sich dabei ergeben:

$$0,4 \le K_1 \le 0,9$$

und

$$0 \le K_2 \le 0,07 / bar$$

Da der Wert für $A_1$ in der Praxis nicht größer als 1 wird, ergeben sich für die Entlüftungszeiten $t_{AH}$ stets kleinere Werte als die Entlüftungszeit $t_{AL}$. Hierdurch ergibt sich ein allmählicher Anstieg sowie ein Begrenzung des Maximalwertes des Differenzdruckes bzw. Giermomentes.

Es ist zweckmäßig, den Wert $A_1$ zu begrenzen auf Werte zwischen 0,0 und 1,0, vorzugsweise auf Werte zwischen 0,2 und 0,8.

Es ist auch möglich, die obengenannte Entlüftungszeit ($t_{AH}$) zu berechnen nach der Formel

$$t_{AH} = A_2 \times t_{AL},$$

wobei

$$A_2 = K_3 - K_4 (Pmax_H - Pmax_L).$$

Hiermit wird bei großen Reibwertunterschieden die Beladung des Fahrzeugs besonders gut berücksichtigt.

Weiter ist es möglich, die Entlüftungszeit ($t_{AH}$) zu berechnen nach der Formel

$$t_{AH} = A_3 \times t_{AL},$$

wobei

$$A_3 = K_6 - K_7 \times (Pmax_H/Pmax_L).$$

Hiermit wird der Einfluß der absoluten Druckhöhe verringert, d. h. der Einfluß der Beladung sowie des Verhältnisses Bremskraft/Bremsdruck in den Radbremsen verringert.

Weiter ist es auch möglich, die Entlüftungszeit $t_{AH}$ zu berechnen nach der Formel

$$t_{AH} = A_4 \times t_{AL},$$

wobei

$$A_4 = K_8 - K_9 \times (Pmax_H + Pmax_L + K_{10} \times Pmax_{LVA})$$

Dabei sind $K_8$, $K_9$, $K_{10}$ wiederum Konstanten und $Pmax_{LVA}$ der Abregeldruck des Vorderrades auf der Low-Seite.

Diese Berechnungsart hat den Vorteil, daß der Reibwert der Low-Seite stärker berücksichtigt wird. Die Abregeldrücke der Hinterachse sind bei unbeladenem Fahrzeug auch auf hohen Reibwerten sehr klein. Hierdurch würde sich bei unbeladenem Fahrzeug auch auf hohen Reibwerten auf beiden Fahrzeugseiten ein nur kleiner Differenzdruck an der VA und nur ein kleines zulässiges Giermoment ergeben, obwohl das Fahrzeug bei beidseitig hohen Reibwerten stabil bremst. Durch die Einbeziehung des Abregeldruckes des Low-Vorderrades kann dieser Effekt verringert werden und somit mehr Bremskraft ausgenutzt und der Bremsweg verkürzt werden.

Anstelle der obengenannten Abregeldrücke der Antriebsachse $Pmax_H$ und $Pmax_L$ kann auch ein mittlerer Verlauf der geregelten Drücke der Räder der Antriebsachse benutzt werden. Dieser wird zweckmäßig berechnet nach der Formel

$$P_m = (Pmax + Pmin) / 2,$$

wobei Pmin der sogenannte Haltedruck des jeweiligen Rades der Antriebsachse bedeutet (siehe Fig. 2b).

Weiterhin kann anstelle des Abregeldruckes ($Pmax_H$, $Pmax_L$) auch ein zeitlich gemittelter Wert des Bremsdruckes verwendet werden. Dieser kann durch eine starke Filterung der Bremsdruckinformationen innerhalb der Elektronik (23) berechnet werden.

Es sind auch Fahrzeuge in Verwendung, bei denen neben der angetriebenen Hinterachse eine weitere Hinterachse mit liftbaren Rädern (Liftachse) vorhanden ist. Bei dieser Bauart verringert sich naturgemäß die Radlast der angetriebenen Achse, wenn die obengenannte Liftachse abgesenkt wird. Durch die Verringerung der Radlast an den Rädern der Antriebsachse verringern sich dann dort auch die Abregeldrücke, da die maximal ubertragbare Bremskraft der Räder der Antriebsachse sich verkleinert. In diesem Fall würden gemäß den obengenannten Verfahren zur Berechnung der Zeiten $t_{AH}$ die sich ergebenden Bremsdruckdifferenzen an den Rädern der Lenkachse durch die Absenkung der Liftachse verändert werden, und zwar in Richtung auf kleinere Giermomente.

Dieses Ergebnis ist jedoch nicht wünschenswert, da das Fahrzeug mit abgesenkter Liftachse auf μ-Split-

Reibwerten erfahrungsgemäß und auch theoretisch nachweisbar stabiler bremst. Es wäre somit in diesem Fall eine höhere Bremsdruckdiffernz ($\Delta$P) an den Rädern der Lenkachse möglich, ohne daß das Fahrzeug unbeherrschbar würde.

Diesem Problem kann begegnet werden, indem durch ein zweckmäßiges Verfahren die Liftachsstellung erkannt wird (z. B. über eine geeignete Sensierung) und die Stellung der Liftachse an das EBS oder ABS der Elektronik (23) übermittelt wird. In diesem Fall wird dann die Entlüftungszeit $t_{AH}$ des mitgesteuerten Rades der Vorderachse (VA) entsprechend verkürzt, um die obengenannte stabilere Bremsung bei abgesenkter Liftachse auszunutzen und damit den Bremsweg zu verkürzen. Dies kann dadurch geschehen, daß in die Formel

$$t_{AH} = A_1 \times t_{AL}$$

der Term $A_1$ berechnet wird mit

$$A_1 = K_1 - K_2 \times K_{11} \times (Pmax_H + Pmax_L).$$

Dabei ist der zusätzliche Faktor $K_{11}$ größer als 1, so daß sich der Wert für $A_1$ verkleinert. Hierdurch ergibt sich wiederum eine Verkürzung der Entluftungszeit $t_{AH}$ des High-Rades, wodurch sich der Differenzdruck ($\Delta$P) bzw. das zugelassene Giermoment erhöhen.

Falls in Sonderfällen auch eine Bremsdruckinformation der Bremszylinder der Vorderachse vorliegt, kann in die obengenannte Formel

$$t_{AH} = A_4 \times t_{AL}$$

auch eingefügt werden

$$A_4 = K_8 - K_9 \times [K_{11} \times (Pmax_H + Pmax_L) + K_{10} \times Pmax_{LVA}]$$

Die Konstante $K_{11}$ kann zweckmäßigerweise gebildet werden aus dem Quotienten

$$K_{11} = (Radlast\ Antriebsachse + Radlast\ Liftachse)$$

$$/\ Radlast\ Antriebsachse.$$

Dieser Quotient ist meistens aus den Fahrzeugdaten grob ermittelbar, da ein festes Achslastverhältnis bei abgesenkter Liftachse meistens konstruktiv vorliegt. Als Wertebereich läßt sich für die Konstante $K_{11}$ etwa

$$1,3 \leq K_{11} \leq 2$$

angeben. Ein Wert von 1,5 für die Konstante $K_{11}$ kann für die meisten Fahrzeugtypen im EG-Raum verwendet werden.

Unter Umständen ist es auch möglich, Werte für die Achslast zu verwenden, die durch geeignete Sensierungen der Achslast der Antriebsachse und der Liftachse ermittelt werden können. Diese werden an die Elektronik des ABS oder EBS übergeben. Damit kann der oben beschriebene Quotient auch genauer berechnet werden. Dieses ist insbesondere bei solchen Fahrzeugen sinnvoll, bei denen das Achslastverhältnis bei abgesenkter Liftachse nicht konstant, sondern wählbar ist, um z. B. eine Traktionssteuerung zu realisieren.

**Patentansprüche**

1. Verfahren zur Giermoment-Abschwachung in einem Fahrzeug mit Antiblockiersystem (ABS), wobei eine Information über die Bremsdrücke ($P_B$) zumindest der Räder der Hinterachse (HA) zur Verfugung steht, **dadurch gekennzeichnet, daß** die Entlüftungszeit ($t_{AH}$) des Bremszylinders (9 oder 10) des mitgesteuerten High-Rades der Vorderachse (VA) von den Bremsdrukken ($P_B$) des High- und des Low-Rades der Hinterachse bzw. Antriebsachse (HA) oder von den Bremsdrücken des High- und des Low-Rades der Hinterachse und vom Bremsdruck des Low-Rades der Vorderachse (VA) abhangt.

2. Verfahren nach Anspruch 1, **dadurch gekennzeichnet, daß** die Entluftungszeit ($t_{AH}$) des Bremszylinders (9 oder 10) des mitgesteuerten High-Rades der Vorderachse (VA) vom Abregeldruck (Pmax) des High- und des Low-Rades der Hinterachse (HA) (Antriebsachse) oder von den Abregeldrucken des High- und des Low-Rades der Hinterachse und vom Abregeldruck (Pmax) des Low-Rades der Vorderachse (VA) abhängt.

3. Verfahren nach Anspruch 2, **dadurch gekennzeichnet, daß** die Entlüftungszeit ($t_{AH}$) des Bremszylinders (9 oder 10) des mitgesteuerten High-Rades der Vorderachse (VA) berechnet wird nach der Formel

$$t_{AH} = A_1 \times t_{AL}$$

mit

$t_{AH}$ :    Entlüftungszeit des mitgesteuerten Vorderrades (High-Rad)

$t_{AL}$ :    Entlüftungszeit des geregelten Vorderrades (Low-Rad)

$$A_1 = K_1 - K_2 \times (Pmax_H + Pmax_L)$$

$K_1, K_2$:    Konstanten

$Pmax_H$:    Abregeldruck des Antriebsrades der High-Seite

$Pmax_L$:    Abregeldruck des Antriebsrades der Low-Seite.

4. Verfahren nach Anspruch 1 bis 2, **dadurch gekennzeichnet, daß** die Entlüftungszeit ($t_{AH}$) des Bremszylinders (9 oder 10) des mitgesteuerten High-Rades der Vorderachse (VA) berechnet wird nach der Formel

$$t_{AH} = A_2 \times t_{AL}$$

mit

$t_{AH}$:    Entlüftungszeit des mitgesteuerten Vorderrades (High-Rad)

$t_{AL}$:    Entluftungszeit des geregelten Vorderrades (Low-Rad)

$$A_2 = K_3 - K_4 \times (Pmax_H - Pmax_L)$$

$K_3, K_4$:    Konstanten

$Pmax_H$:    Abregeldruck des Antriebsrades auf der High-Seite

$Pmax_L$:    Abregeldruck des Antriebsrades auf der Low-Seite

5. Verfahren nach Anspruch 1 bis 2, **dadurch gekennzeichnet, daß** die Entluftungszeit ($t_{AH}$) des Bremszylinders (9 oder 10) des mitgesteuerten High-Rades der Vorderachse (VA) berechnet wird nach der Formel

$$t_{AH} = A_3 \times t_{AL}$$

mit

$t_{AH}$: Entlüftungszeit des mitgesteuerten Vorderrades (High-Rad)

$t_{AL}$: Entlüftungszeit des geregelten Vorderrades (Low-Rad)

$$A_3 = K_6 - K_7 \times (Pmax_H / Pmax_L)$$

$K_6, K_7$: Konstanten

$Pmax_H$: Abregeldruck des Antriebsrades auf der High-Seite

$Pmax_L$: Abregeldruck des Antriebsrades auf der Low-Seite

6. Verfahren nach Anspruch 1 bis 2, wobei auch Informationen über die Bremsdrücke ($P_B$) der Räder der Vorderachse (VA) zur Verfügung stehen, **dadurch gekennzeichnet, daß** die Entlüftungszeit ($t_{AH}$) des Bremszylinders (9 oder 10) des mitgesteuerten High-Rades der Vorderachse (VA) errechnet wird nach der Formel

$$t_{AH} = A_4 \times t_{AL}$$

mit

$t_{AH}$: Entluftungszeit des mitgesteuerten Vorderrades (High-Rad)

$t_{AL}$: Entlüftungszeit des geregelten Vorderrades (Low-Rad)

$$A_4 = K_8 - K_9 \times (Pmax_H + Pmax_L + K_{10} \times Pmax_{LVA})$$

$K_8, K_9, K_{10}$: Konstanten

$Pmax_H$: Abregeldruck des Antriebsrades auf der High-Seite

$Pmax_L$: Abregeldruck des Antriebsrades auf der Low-Seite

$Pmax_{LVA}$: Abregeldruck des Vorderrades auf der Low-Seite.

7. Verfahren nach einem oder mehreren der Ansprüche 1 bis 6, **dadurch gekennzeichnet, daß** anstelle des Abregeldruckes (Pmax) ein mittlerer Druck $P_m$ verwendet wird, webei

$$P_m = (Pmax + Pmin) / 2.$$

mit
Pmin = Haltedruck

8. Verfahren nach einem oder mehreren der Ansprüche 1 bis 6, **dadurch gekennzeichnet, daß** anstelle des Abregeldruckes (Pmax) ein zeitlich gemittelter Wert des Bremsdruckes ($P_B$) verwendet wird.

9. Verfahren nach Anspruch 8, **dadurch gekennzeichnet, daß** der zeitlich gemittelte Wert des Bremsdruckes ($P_B$) durch eine starke Filterung der Bremsdruckinformationen gebildet wird.

10. Verfahren nach Anspruch 3 für ein Fahrzeug mit Liftachse, **dadurch gekennzeichnet, daß**, sobald durch ein geeignetes Verfahren auf eine abgesenkte Liftachse erkannt wurde, der Term $A_1$ berechnet wird nach der Formel

$$A_1 = K_1 - K_2 \times K_{11} \times (Pmax_H + Pmax_L)$$

mit $K_{11} \geq 1$.

11. Verfahren nach Anspruch 6 für ein Fahrzeug mit Liftachse, **dadurch gekennzeichnet, daß** sobald durch ein geeignetes Verfahren auf abgesenkte Liftachse erkannt wurde, der Term $A_4$ berechnet wird nach der Formel

$$A_4 = K_8 - K_9 \times [K_{12} \times (Pmax_H + Pmax_L) + K_{10} \times Pmax_{LVA}]$$

12. Verfahren nach Anspruch 10 bis 11, **dadurch gekennzeichnet,** daß die Konstante $K_{11}$ gebildet wird nach der Formel:

$$K_{11} = (\text{Radlast Antriebsachse} + \text{Radlast Liftachse})$$

$$/ \text{Radlast Antriebsachse}$$

13. Verfahren nach Anspruch 3 bis 12, **dadurch gekennzeichnet, daß** die Werte für $A_1$, $A_2$, $A_3$, $A_4$ begrenzt sind auf Werte zwischen 0,0 und 1,0, vorzugsweise auf Werte zwischen 0,2 und 0,8.

**Claims**

1. Method of damping yaw moments in a vehicle having an anti-lock braking system (ABS), wherein information relating to the brake pressures ($P_B$) of at least the wheels of the rear axle (HA) is available, **characterised in that** the venting time ($t_{AH}$) of the brake cylinder (9 or 10) of the conjointly regulated high wheel of the front axle (VA) is dependent upon the brake pressures ($P_B$) of the high wheel and the low wheel of the rear axle or drive axle (HA) or upon the brake pressures of the high wheel and the low wheel of the rear axle and upon the brake pressure of the low wheel of the front axle (VA).

2. Method according to claim 1, **characterised in that** the venting time ($t_{AH}$) of the brake cylinder (9 or 10) of the conjointly regulated high wheel of the front axle (VA) is dependent upon the limit pressure (Pmax) of the high wheel and the low wheel of the rear axle (HA) (drive axle) or upon the limit pressures of the high wheel and the low wheel of the rear axle and upon the limit pressure (Pmax) of the low wheel of the front axle (VA).

3. Method according to claim 2, **characterised in that** the venting time ($t_{AH}$) of the brake cylinder (9 or 10) of the conjointly regulated high wheel of the front axle (VA) is calculated according to the formula

$$t_{AH} = A_1 \times t_{AL}$$

wherein

$t_{AH}$: venting time of the conjointly regulated front wheel (high wheel)

$t_{AL}$: venting time of the controlled front wheel (low wheel)

$$A_1 = K_1 - K_2 \times (Pmax_H + Pmax_L)$$

$K_1$, $K_2$: constants

$Pmax_H$: limit pressure of the drive wheel on the high side

$Pmax_L$: limit pressure of the drive wheel on the low side.

4. Method according to claim 1 to 2, **characterised in that** the venting time ($t_{AH}$) of the brake cylinder (9 or 10) of the conjointly regulated high wheel of the front axle (VA) is calculated according to the formula

$$t_{AH} = A_2 \times t_{AL}$$

wherein

$t_{AH}$: venting time of the conjointly regulated front wheel (high wheel)

$t_{AL}$: venting time of the controlled front wheel (low wheel)

$$A_2 = K_3 - K_4 \times (Pmax_H - Pmax_L)$$

$K_3, K_4$: constants

$Pmax_H$: limit pressure of the drive wheel on the high side

$Pmax_L$: limit pressure of the drive wheel on the low side.

5. Method according to claim 1 or 2, **characterised in that** the venting time ($t_{AH}$) of the brake cylinder (9 or 10) of the conjointly regulated high wheel of the front axle (VA) is calculated according to the formula

$$t_{AH} = A_3 \times t_{AL}$$

wherein

$t_{AH}$: venting time of the conjointly regulated front wheel (high wheel)

$t_{AL}$: venting time of the controlled front wheel (low wheel)

$$A_3 = K_6 - K_7 \times (Pmax_H / Pmax_L)$$

$K_6, K_7$: constants

$Pmax_H$: limit pressure of the drive wheel on the high side

$Pmax_L$: limit pressure of the drive wheel on the low side.

6. Method according to claim 1 or 2, wherein information relating to the brake pressures ($P_B$) of the wheels of the front axle (VA) also is available, **characterised in that** the venting time ($t_{AH}$) of the brake cylinder (9 or 10) of the conjointly regulated high wheel of the front axle (VA) is calculated according to the formula

$$t_{AH} = A_4 \times t_{AL}$$

wherein

$t_{AH}$: venting time of the conjointly regulated front wheel (high wheel)

$t_{AL}$: venting time of the controlled front wheel (low wheel)

$$A_4 = K_8 - K_9 \times (Pmax_H + Pmax_L + K_{10} \times Pmax_{LVA})$$

$K_6, K_7, K_{10}$: constants

$Pmax_H$: limit pressure of the drive wheel on the high side

Pmax$_L$:      limit pressure of the drive wheel on the low side

Pmax$_{LVA}$:      limit pressure of the front wheel on the low side.

**7.** Method according to one or more of claims 1 to 6, **characterised in that**, instead of the limit pressure (Pmax), an average pressure $P_m$ is used, wherein

$$P_m = (Pmax + Pmin) / 2$$

wherein
Pmin = holding pressure.

**8.** Method according to one or more of claims 1 to 6, **characterised in that**, instead of the limit pressure (Pmax), a value of the brake pressure ($P_B$) averaged over time is used.

**9.** Method according to claim 8, **characterised in that** the value of the brake pressure ($P_B$) averaged over time is formed by extensive filtering of the brake pressure information.

**10.** Method according to claim 3 for a vehicle having a liftable axle, **characterised in that**, as soon as it has been recognised by a suitable method that the liftable axle is lowered, the term A, is calculated according to the formula

$$A_1 = K_1 - K_2 \times K_{11} \times (Pmax_H + Pmax_L)$$

wherein $K_{11} \geq 1$.

**11.** Method according to claim 6 for a vehicle having a liftable axle, **characterised in that**, as soon as it has been recognised by a suitable method that the liftable axle is lowered, the term $A_4$ is calculated according to the formula

$$A_4 = K_8 - K_9 \times [K_{12} \times (Pmax_H + Pmax_L) + K_{10} \times Pmax_{LVA}].$$

**12.** Method according to claim 10 or 11, **characterised in that** the constant $K_{11}$ is formed according to the formula

$$K_{11} = (\text{wheel load of drive axle} + \text{wheel load of liftable axle})$$

$$/ \text{ wheel load of drive axle.}$$

**13.** Method according to claim 3 to 12, **characterised in that** the values for $A_1$, $A_2$, $A_3$, $A_4$ are limited to values between 0.0 and 1.0, preferably to values between 0.2 and 0.8.

**Revendications**

**1.** Procédé de réduction de couple de lacet dans un véhicule ayant un système antiblocage (ABS) disposant d'une information sur les pressions de freinage ($P_B$) au moins des roues de l'essieu arrière (HA), **caractérisé en ce que** le temps de relâchement ($t_{AH}$) du cylindre de freinage (9 ou 10) de la roue haute co-entraînée de l'essieu avant (VA) dépend des pressions de freinage ($P_B$) de la roue haute et de la roue basse de l'essieu arrière (HA) ou essieu moteur ou des pressions de freinage de la roue haute et de la roue basse de l'essieu arrière et de la pression de freinage de la roue basse de l'essieu avant (VA).

**2.** Procédé selon la revendication 1, **caractérisé en ce que** le temps de relâchement ($t_{AH}$) du cylindre de freinage (9 ou 10) de la roue haute co-entraînée de l'essieu avant (VA) dépend de la pression de régulation (Pmax) de la roue haute et de la roue basse de l'essieu arrière (HA) (essieu moteur) ou des pressions de régulation de la roue haute et de la roue basse de l'essieu arrière et de la pression de régulation (Pmax) de la roue basse de l'essieu avant (VA).

3. Procédé selon la revendication 2, **caractérisé en ce que** le temps de relâchement ($t_{AH}$) du cylindre de freinage (9 ou 10) de la roue haute co-entraînée de l'essieu avant (VA) est calculé suivant la formule

$$t_{AH} = A_1 \times t_{AL}$$

dans laquelle

$t_{AH}$ : temps de relâchement de la roue avant co-entraînée (roue haute)

$t_{AL}$ : temps de relâchement de la roue avant régulée (roue basse)

$$A_1 = K_1 - K_2 \times (Pmax_H + Pmax_L)$$

$K_1, K_2$ constantes

$Pmax_H$: Pression de régulation de la roue motrice du côté haut et

$Pmax_L$: Pression de régulation de la roue motrice du côté bas.

4. Procédé selon la revendication 1, **caractérisé en ce que** le temps de relâchement ($t_{AH}$) du cylindre de frein (9 ou 10) de la roue haute co-entraînée de l'essieu avant (VA) est calculé suivant la formule

$$t_{AH} = A_2 \times t_{AL}$$

dans laquelle

$t_{AH}$ : temps de relâchement de la roue avant co-entraînée (roue haute)

$t_{AL}$: temps de relâchement de la roue avant régulée (roue basse)

$$A_2 = K_3 - K_4 \times (Pmax_H + Pmax_L)$$

$K_3, K_4$ constantes

$Pmax_H$: Pression de régulation de la roue motrice du côté haut

$Pmax_L$: Pression de régulation de la roue motrice du côté bas

5. Procédé selon la revendication 1 ou 2, **caractérisé en ce que** le temps de relâchement ($t_{AH}$) du cylindre de freinage (9 ou 10) de la roue haute co-entraînée de l'essieu avant (VA) est calculé suivant la formule

$$t_{AH} = A_3 \times t_{AL}$$

dans laquelle

$t_{AH}$ : temps de relâchement de la roue avant co-entraînée (roue haute)

$t_{AL}$ : temps de relâchement de la roue avant régulée (roue basse)

$$A_3 = K_6 - K_7 \times (Pmax_H + Pmax)$$

$K_6, K_7$ : constantes

Pmax$_H$:    Pression de régulation de la roue motrice du côté haut

Pmax$_L$:    Pression de régulation de la roue motrice du côté bas.

**6.** Procédé selon la revendication 1 et 2, dans lequel on dispose également d'informations sur les pressions de freinage (P$_B$) sur les roues de l'essieu avant (VA), **caractérisé en ce que** le temps de relâchement (t$_{AH}$) du cylindre de freinage (9 ou 10) de la roue haute co-entraînée de l'essieu avant (VA) est obtenu par la formule

$$t_{AH} = A_4 \ x \ t_{AL}$$

dans laquelle

t$_{AH}$ :    temps de relâchement de la roue avant co-entraînée (roue haute)

t$_{AL}$:    temps de relâchement de la roue avant régulée (roue basse)

$$A_4 = K_8 - K_9 \ x \ (Pmax_H + Pmax_L + K_{10} \ x \ Pmax_{LVA})$$

K$_8$, K$_9$, K$_{10}$ :    constantes

Pmax$_H$:    Pression de régulation de la roue motrice du côté haut

Pmax$_L$ :    Pression de régultion de la roue motrice du côté bas

Pmax$_{LVA}$:    Pression de régulation de la roue avant du côté bas

**7.** Procédé selon une ou plusieurs des revendications 1 à 6, **caractérisé en ce que**, à la place de la pression de régulation (Pmax), on utilise une pression moyenne P$_m$, dans laquelle :

$$P_m = (Pmax + Pmin) / 2,$$

dans laquelle
Pmin = Pression de maintien

**8.** Procédé selon une ou plusieurs des revendications 1 à 6, **caractérisé en ce que**, en remplacement de la pression de régulation (Pmax), on utilise une valeur moyenne instantanée de la pression de freinage (P$_B$).

**9.** Procédé selon la revendication 8, **caractérisé en ce que** la valeur moyenne instantanée de la pression de freinage (P$_B$) est obtenue moyennant une filtration importante des informations relatives au freinage.

**10.** Procédé selon la revendication 3 relatif à un véhicule équipé d'un essieu additionnel, **caractérisé en ce que**, dès la reconnaissance de la position abaissée de l'essieu additionnel par un procédé approprié, le terme A$_1$ sera calculé suivant la formule

$$A_1 = K_1 - K_2 \ x \ K_{11} \ x \ (Pmax_H - Pmax_L)$$

dans laquelle K$_{11} \geq 1$

**11.** Procédé selon la revendication 6, pour un véhicule équipé d'un essieu additionnel, **caractérisé en ce que**, dès la reconnaissance de la position abaissée de l'essieu additionnel par un procédé approprié, le terme A$_4$ sera calculé suivant la formule :

$$A_4 = K_8 - K_9 \ x \ [K_{12} \ x \ (Pmax_H - Pmax_L) + K_{10} \ x \ Pmax_{LVA}]$$

**12.** Procédé selon la revendication 10 ou 11, <u>**caractérisé en ce que**</u> la constante $K_{11}$ est obtenue par la formule :

$$K_{11} = \text{(charge sur la roue de l'essieu moteur +}$$

$$\text{charge sur la roue de l'essieu additionnel)}$$

$$\text{/ charge sur la roue de l'essieu moteur}$$

**13.** Procédé selon l'une des revendications 3 à 12, <u>**caractérisé en ce que**</u> les valeurs de $A_1$, $A_2$, $A_3$, $A_4$ sont limitées à des valeurs comprises entre 0,0 et 1,0, de préférence à des valeurs comprises entre 0,2 et 0,8.

FIG.1

VA

HA

EBS
ABS
ASR

EP 0 844 155 B1

**FIG. 2**

EP 0 844 155 B1